# EUROPEAN PATENT SPECIFICATION

(11) **EP 0 705 468 B1**
(45) Date of publication and mention of the grant of the patent: **21.04.1999**
(21) Application number: 94918934.4
(22) Date of filing: 24.06.1994
(51) Int. Cl.: G06K 19/067

(54) **METHOD OF CODING A CODABLE DEVICE**
KODIERUNGSVERFAHREN FÜR EINE KODIERBARE VORRICHTUNG
PROCEDE POUR CODER UN DISPOSITIF DE CODAGE

(30) Priority: 25.06.1993 GB 9313187
(43) Date of publication of application: 10.04.1996
(73) Proprietor: BEWATOR COTAG LTD, Cirencester, Gloucester GL7 1YG (GB)
(72) Inventor: FALCK, John, Bellew, Cambridge CB6 3UP (GB)
(74) Representative: Powell, Stephen David
(86) International application number: GB9401373
(87) International publication number: WO9500925

(56) References cited:
- EP-A- 0 349 412
- DE-A- 3 619 530
- FR-A- 2 463 457

## Description

The present invention relates to codable devices and a method of encoding them. In particular it relates to encoding r.f. identification tags.

Radio frequency tags are gaining increasing acceptance as identification devices. One major application is within the security industry as a means to provide a convenient method of access control.

For access control applications, each tag is generally programmed with unique data which is associated with a particular cardholder. Conveniently this data is divided into a number of fields where each field has a specific function. For example one field may be allocated to a particular customer site number while another field may refer to the reference number of each individual card holder. In the normal course of business there is a need regularly to issue or withdraw cards as employees join or leave organisations. In addition users not infrequently lose or break their cards. It will be appreciated therefore that the ability to program tags in the field quickly, easily and securely significantly simplifies the task of issuing cards to end-users.

A variety of passive tags already exist which require to be pre-programmed during manufacture. This operation is generally performed by means of a laser or by direct contact with the electronic programming circuit of the card. The need to define the data in the tag at the time of manufacture is both inflexible and cumbersome. It considerably complicates the process of distribution of cards to end users.

There is however a second form of passive tag which is field-programmable. This tag utilises a silicon custom device which incorporates an electrically erasable memory. While this technique provides flexibility, it also introduces a significant cost penalty.

The present invention relates to a method by which it is possible to programme a passive tag by means of either fusing or blowing selected data elements within a silicon device.

FR-A-2463457 discloses a codable card with cells which, over a period of use, are gradually all erased; after erasing selected cells, a respective fuse is blown to prevent subsequent resetting of the erased cells.

A particular problem of programming a tag remotely by fusing or blowing memory elements is the considerable difference in the time taken to perform the operation. This is due to variations in the silicon wafer during its production. By relying only on a time delay it is very difficult to be certain that each memory element has been correctly programmed.

The present invention seeks to overcome the above problem.

According to a first aspect of the present invention there is provided a method of coding a codable device, the code of which is determined by whether individual ones of a plurality of fusible links have been fused, wherein a fusing voltage is applied in turn to each of the links which is to be fused and the state of each such link is monitored so that, immediately it has been fused by the fusing voltage, the fusing voltage is removed therefrom and is then applied to the next link which is to be fused.

Preferably, after completion of the coding, the codable device is subjected to a process which changes its state so that it is no longer possible for application of a fusing voltage to fuse the fusible links. This feature may correspond to a second aspect of the present invention.

According to a third aspect of the present invention there is provided a codable device comprising a memory having a plurality of fusible links defining logic '1's or '0's, means responsive to an external input to fuse in turn selected ones of said links to change their corresponding logic status and thus to encode the device, and means responsive to said change in logic status to apply the external input to the next fusible link.

Means may be provided for, after a completed encoding process, modifying the device so that no further encoding thereof may occur. Said means may be a dedicated fusible link which is fused as a final step of the original encoding process.

The external input may comprise a conventional interrogation and/or power signal and a separate input for applying, at selected times, a fusing voltage to selected fusible links. The codable device may be a coded tag or transponder, preferably a passive device.

A preferred embodiment of the present invention will now be described, by way of example only, with reference to the accompanying drawing, of which:

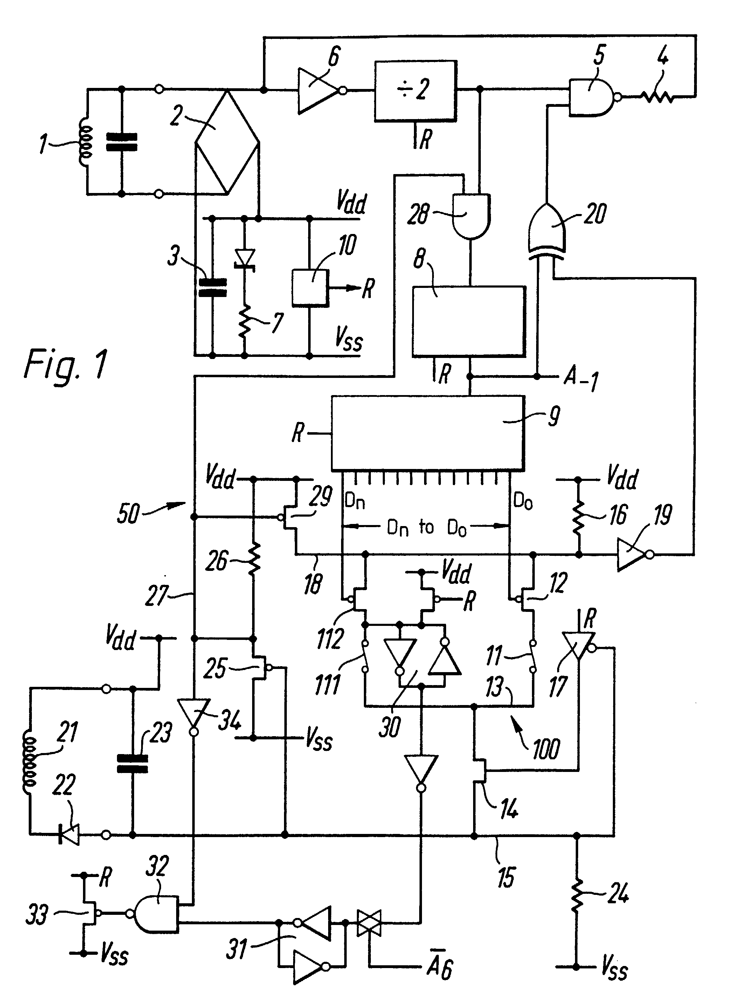

Fig. 1 is a circuit diagram of a codable tag in accordance with the present invention.

The preferred embodiment is a passive tag which operates on the same basic principles as previously described in UK. Patent No: GB 2077556B. However, the passive device derives its power from a 132kHz transmit signal. This necessitates a completely different design for the input circuitry.

Referring to the drawings, a 132 kHz tuned coil 1 of the tag 50 is connected directly across the input of a bridge rectifier 2. The output from the bridge rectifier 2 forms the power rails Vdd and Vss for the device while a capacitor 3 across the rails provides smoothing. One leg of the bridge rectifier 2 is connected via a resistor 4 to an output buffer 5 which provides the pulse modulated 66 kHz data output. This effectively modulates at 66 kHz the 132 kHz signal on coil 1 in accordance with the data content of the memory.

One side of the tuned coil 1 is connected to an inverter 6. A shunt circuit 7 protects the input to the inverter from being overdriven. The output from the inverter 6 passes to a divider chain 8 and the data selector 9 which control the internal logic of the device.

A reset circuit 10 is included which inhibits operation of the logic until the voltage induced by the 132 kHz input signal has reached a pre-defined level. Below this level all of the internal logic is held in a reset condition. Once reset R is lifted, the divider chain 8 is enabled and the device commences to output data. A memory 100 comprises n elements which are connected across a lower rail 13 and an upper rail 18. Each element consists of a programmable link 11 connected in series with a pFET 12. Each link 11 originally comprises two conductive layers electrically insulated from each other by an intervening layer of insulating material. When subjected to a fusing voltage for a sufficiently long time, the insulating layer breaks down and the two conductive layers become permanently electrically interconnected to provide a current path. The gate of pFET 12 in each element is connected to its associated output from the data selector 9. The lower rail 13 is connected via an nFET 14 to the program line 15. The gate of the nFET 14 is controlled by Reset through a level changer 17. The upper rail 18 of the memory is biased at Vdd by a high value resistor 16. The upper rail also forms one data input via an inverter 19 to the exclusive OR gate 20.

The program line 15 is connected to the program coil 21 in series with a diode 22. A capacitor 23 is connected across Vdd and the program line 15. At rest the program line 15 is biased at Vss by resistor 24. The program line 15 is also connected to the gate of a pFET 25 which is in series with a resistor 26. The arrangement is connected in series across Vdd and Vss. The midpoint of the arrangement forms the input to the control line 27. The control line 27 forms one input to an AND gate 28 at the start of the main divider chain 8. This makes it possible to inhibit operation of the data selector 9. The control line also is connected to the gate of a strong pFET device 29 connected between Vdd and the upper rail 18. The strong FET device has a low resistance.

Some of the data bits corresponding to higher values of n may be used to control the internal operation of the device. Each of these elements has a keeper circuit 30 connected across Vdd and the junction between the fusible link 111 and the pFET 112. In one particular embodiment of the tag, the highest n data bit provides the function of "write protect". The output from this memory element forms the data input to a latch 31 which is set when A6 is high. The output from the latch 31 provides one input via NAND gate 32 to the gate of a strong pFET 33 which in turn is connected between the Reset line and Vss. The second input to the NAND gate 32 is derived via an inverter 34 from the control line 27. When the pFET 33 is on, it ensures that Reset is applied.

The operation of the tag circuit will now be described. Consider initially operation of the device in the read mode. On receiving a 132 kHz pulse, the main circuit will be powered up via the bridge rectifier 2. The program line 15 will rest at a voltage of Vss. Initially as the 132 kHz signal increases, Reset will be low which will establish all latches in a defined condition. It will also ensure that the keeper circuits 30 are initially set high and the upper rail 18 is at Vdd. At the instant that the voltage between Vdd and Vss reaches a value of about 3.0V, the reset circuit will cause Reset to go high. This will enable operation of the internal logic. During a period equivalent to the first data bit of an interrogation cycle, leading data bit DO will be selected.Since nFET 14 is open, the upper rail 18 will acquire a high or low state dependent on whether the link in the leading data element is fused. The inverse of the upper rail condition will be input to the exclusive OR gate 20.

As the interrogation cycle continues so each data bit is polled by data selector 9 and its status passed to the exclusive OR gate 20. This is combined with the A-1 signal at the exclusive-OR gate 20 to generate a Manchester encoded data output at buffer 5.

The operation of the data element with the highest value of n is somewhat different from the other data bits. Dependent on the state of the fusible link 111, the output will be set at the start of the interrogation cycle either high or low. If the program protect bit has been set, the output will be low. Any attempt to program a tag will therefore cause Reset to go low. This will reset the latches and ensure that nFET 14 is off. In this state it will be impossible to fuse any of the data elements.

Consider now the process for programming the memory of the device. A new tag is supplied unprogrammed, and each memory element therefore will be in an open circuit condition. When the tag receives a 132 kHz input signal, the data selector will commence sequentially to poll each of the data bits. About 1 msec after the instant that the data selector 9 polls a bit which should be set to a 1, a high frequency signal is inductively coupled to the program coil 21. This signal will cause the program line 15 to move to a typical voltage of -20V with respect to Vss. This will pull negative the gate to the pFET 25 which in turn will pull low the control line 27. Immediately the divider chain 8 will be inhibited causing the data selector 9 to be locked to the target data bit. At the same time the upper rail 18 of the memory will be connected via the strong pFET 29 to Vdd. Level changer circuit 17 will be also brought into operation to handle the difference in voltage between Vdd and the program line 15.

At the time that the control line 27 changes state, the fusible link of the target data bit will initially be "open circuit" so the upper rail 18 will be high. Thus the output of the exclusive OR gate will be at 0. This will result in no signal being generated at the 66 kHz output buffer 5 of the device. After an indeterminate period of time of anything between typically 5 to 50 msec, the memory element will fuse. This will cause the upper rail 18 to swing low and apply a logical 1 to the data input of the exclusive OR gate 20. The tag will now output a continuous 66 kHz signal for so long as the program signal continues to be applied.

The presence of the 66 Khz signal indicates to the programming unit that the target data bit has fused. The programming signal is now removed. This action causes the control line 27 to go high and so permits further timing pulses to be applied to the data selector 9. The data selector will now continue to poll each data bit in turn until the next target bit is reached. At this point another program signal is continuously applied until such time as the 66 kHz output is detected. This process is repeated until all of the bits which are required to be set have been addressed and fused.

A feature of the device is the ability to write protect the memory. This is set by fusing the link 111 of the last data element. The circuit operates as follows During the first half of an interrogation cycle the status of the last data bit is available at the input of the latch 31 since A6 is high. Where a new device is to be programmed, the output from the write protect latch 31 will therefore be low. In this situation the status of the control line 27 will have no effect on Reset so programming may proceed as described above. When the data selector 9 polls the write protect bit, it may be fused by the same process as for any other memory element. However during the period when the data bit is polled by the data selector 9, A6 will be low. This will prevent the write protect latch 31 from being set. The latch circuit 31 thus makes it possible to monitor the status of program protect bit as it is being fused.

The above-described arrangement has a number of advantages. A particular benefit of the present invention is that it is possible to monitor continuously the status of the memory element while it is being fused. This gives the process a high level of integrity while keeping the overall programming time down to a minimum. Moreover, the process may be carried out in the field and so offers the necessary flexibility. At the same time the internal silicon device can be fabricated at low cost. An advantage of the present invention, particularly in security applications, is that once the data in the card is entered, it can be protected from further attempts at programming. In addition the data in the tag is almost indestructible, and is thus effectively immune to corruption even if subjected to very high or very low temperatures.

Various modifications may be made to the above-described embodiment. In particular, the fusible link may take a number of forms, e.g. the size and shape of the conductive and insulating parts may be selected as desired. In an alternative arrangement, the further links correspond more to conventional fuses in that they each comprise a single conductive member or diode or other electronic device which is initially connected in circuit and is then "blown" into open circuit upon application of a fusing voltage for a sufficient length of time. The method of encoding the memory is then modified so that fused links correspond to logic "0" rather than logic "1".

In less sensitive applications, the "write protect" feature may be omitted.

The encoding method is suitable also for active tags, i.e. tags having their own power source, or indeed for any application where it is advantageous permanently to encode data into a device.

## Claims

1. A method of coding a codable device (50), the code of which is determined by whether individual ones of a plurality of fusible links (11) have been fused, wherein a fusing voltage is applied in turn to each of the links which is to be fused and characterised in that the state of each such link is monitored so that, immediately it has been fused by the fusing voltage, the fusing voltage is removed therefrom and is then applied to the next link which is to be fused.

2. A method according to claim 1, wherein, after completion of the coding, the device is subjected to a process which changes its state so that it is no longer possible for application of a fusing voltage to fuse the fusible links.

3. A codable device (50) comprising a memory (100) having a plurality of fusible links (11) defining logic '1's or '0's, comprising means (21) responsive to an external input to fuse in turn selected ones of said links to change their corresponding logic status and thus to encode the device, characterised by means (18, 20, 5) responsive to said change in logic status to apply the external input to the next fusible link.

4. A device according to claim 3, wherein means (111) are provided for, after a completed encoding process, modifying the device so that no further encoding thereof may occur.

5. A device according to claim 4, wherein said means for modifying the device is a dedicated fusible link (111) which is fused as a final step of an encoding process of the device.

6. A device according to any of claims 3 to 5, wherein the external input comprises means supplying an interrogation and/or power signal and a separate input (21) for applying, at selected times, a fusing voltage to selected fusible links (11).

7. A device according to any of claims 3 to 6, wherein selected logic elements of the memory (100) are connected to keeper circuits (30).

8. A device according to any of claims 3 to 7, wherein the memory (100) comprises a plurality of fusible links (11) connected in series with a respective pFET (12) between a lower rail (13) and an upper rail (18), the gate of each pFET (112) being connected to a respective output of a date selector (9), the lower rail (13) being connected via an nFET (14) to a program line (15) and the upper rail (18) forming part of said means responsive to said change in logic status.

## Patentansprüche

1. Verfahren zur Kodierung einer kodierbaren Vorrichtung (50), deren Kode dadurch bestimmt ist, ob einzelne einer Mehrzahl von schmelzbaren Verbindungen (11) geschmolzen sind, wobei eine Schmelzspannung der Reihe nach an jede der Verbindungen angelegt wird, die aufzuschmelzen sind, und dadurch gekennzeichnet, daß der Zustand jeder solchen Verbindung überwacht wird derart, daß unmittelbar nach dem Aufschmelzen durch die Schmelzspannung die Schmelzspannung hiervon entfernt und dann an die nächste aufzuschmelzende Verbindung angelegt wird.

2. Verfahren nach Anspruch 1, bei dem nach Beendigung der Kodierung die Vorrichtung einem ihren Zustand ändernden Prozeß unterworfen wird derart, daß das Anlegen einer Schmelzspannung zum Aufschmelzen der schmelzbaren Verbindungen nicht länger möglich ist.

3. Kodierbare Vorrichtung (50), aufweisend: einen Speicher (100) mit einer Mehrzahl von schmelzbaren Verbindungen (11), die logische "1" oder "0" definieren, Mittel (21), die auf einen externen Eingang ansprechen, um der Reihe nach ausgewählte der Verbindungen zu schmelzen, um ihren jeweiligen logischen Status zu ändern und so die Vorrichtung zu kodieren, gekennzeichnet durch Mittel (18, 20, 5), die auf die Änderung im logischen Status ansprechen, um den externen Eingang an die nächste schmelzbare Verbindung anzulegen.

4. Vorrichtung nach Anspruch 3, bei der Mittel (111) dazu vorgesehen sind, um nach einem abgeschlossenen Kodierungsverfahren die Vorrichtung derart zu modifizieren, daß keine weitere Kodierung erfolgen kann.

5. Vorrichtung nach Anspruch 4, bei der die Mittel zur Modifizierung der Vorrichtung eine speziell ausgebildete schmelzbare Verbindung (111) sind, die in einem abschließenden Schritt eines Kodierungsverfahrens der Vorrichtung geschmolzen wird.

6. Vorrichtung nach einem der Ansprüche 3 bis 5, bei der der externe Eingang Mittel aufweist, die ein Abfrage- und/oder Leistungssignal und einen separaten Eingang (21) zum Anlegen einer Schmelzspannung an ausgewählte schmelzbare Verbindungen (11) zu ausgewählten Zeiten aufweisen.

7. Vorrichtung nach einem der Ansprüche 3 bis 6, bei der ausgewählte logische Elemente des Speichers (100) mit Halteschaltungen (30) verbunden sind.

8. Vorrichtung nach einem der Ansprüche 3 bis 7, bei der der Speicher 100 eine Mehrzahl von schmelzbaren Verbindungen (11) aufweist, die jeweils in Reihe mit einem pFET (12) zwischen eine untere Schiene (13) und eine obere Schiene (18) geschaltet sind, wobei das Gate jedes pFET (112) mit einem zugehörigen Ausgang eines Datenselektors (9) verbunden ist, die untere Schiene (13) über einen nFET (14) mit einer Programmierungsleitung (15) verbunden ist und die obere Schiene (18) einen Teil der auf die Änderung im logischen Status ansprechenden Mittel bildet.

## Revendications

1. Procédé pour coder un dispositif pouvant être codé (50), dont le code est déterminé par le fait que des liaisons fusibles individuelles d'une pluralité de liaisons fusibles (11) ont été fondues, dans lequel une tension de fusion est appliquée tour-à-tour à chacune des liaisons qui doit être fondue et caractérisé en ce que l'état de chacune de telles liaisons est contrôlé de sorte que, immédiatement qu'elle a été fondue par la tension de fusion, la tension de fusion est retirée de ceile-ci et est ensuite appliquée à la liaison suivante qui doit être fondue.

2. Procédé selon la revendication 1, dans lequel, après accomplissement du codage, le dispositif est soumis à un processus qui change son état de sorte qu'il n'est plus possible d'appliquer une tension de fusion pour fondre les liaisons fusibles.

3. Dispositif pouvant être codé (50) comprenant une mémoire (100) ayant un certain nombre de liaisons fusibles (11) définissant des '1' ou des '0' logiques, comprenant un moyen (21) répondant à une entrée externe pour fondre tour-à-tour des liaisons choisies desdites liaisons pour changer leur état logique correspondant et ainsi coder le dispositif, caractérisé par des moyens (18, 20, 5) répondant audit changement d'état logique pour appliquer l'entrée externe à la liaison fusible suivante.

4. Dispositif selon la revendication 3, dans lequel des moyens (111) sont prévus pour, après un processus de codage accompli, modifier le dispositif de sorte qu'aucun autre codage de celui-ci ne peut se produire.

5. Dispositif selon la revendication 4, dans lequel le moyen précité pour modifier le dispositif est une liaison fusible dédiée (111) qui est fondue en une étape finale d'un processus de codage du dispositif.

6. Dispositif selon l'une quelconque des revendications 3 à 5, dans lequel l'entrée externe comprend un moyen fournissant un signal d'interrogation et/ou d'alimentation et une entrée séparée (21) pour appliquer, à des instants sélectionnés, une tension de fusion à des liaisons fusibles sélectionnées (11).

7. Dispositif selon l'une quelconque des revendications 3 à 6, dans lequei des éléments logiques sélectionnées de la mémoire (100) sont reliés à des circuits de maintien (30).

8. Dispositif selon l'une quelconque des revendications 3 à 7, dans lequel la mémoire (100) comprend un certain nombre de liaisons fusibles (11) reliées en série avec un pFET (12) respectif entre un rail inférieur (13) et un rail supérieur (18), la grille de chaque pFET (112) étant reliée à une sortie respective d'un sélecteur de données (9), le rail inférieur (13) étant relié par l'intermédiaire d'un nFET (14) à une ligne de programme (15) et le rail supérieur (18) faisant partie du moyen précité répondant au changement précité d'état logique.
